# FASCICULE DE BREVET EUROPEEN

(11) **EP 3 483 733 B1**
(45) Date de publication et mention de la délivrance du brevet: **13.05.2020**
(21) Numéro de dépôt: 18205310.8
(22) Date de dépôt: 09.11.2018
(51) Int. Cl.: G06F 11/30, G06F 11/34

(54) **PROCEDE ET DISPOSITIF DE RECHERCHE DE MARGE D'OPTIMISATION DE RESSOURCES D'UNE CHAINE APPLICATIVE**
VERFAHREN UND VORRICHTUNG ZUR ERFORSCHUNG EINER MARGE ZUR RESSOURCENOPTIMIERUNG IN EINER ANWENDUNGSKETTE
METHOD AND APPARATUS FOR SEARCHING FOR A RESOURCE OPTIMISATION MARGIN OF A BUSINESS CHAIN

(30) Priorité: 09.11.2017 FR 1760547
(43) Date de publication de la demande: 15.05.2019
(73) Titulaire: BULL SAS, 78340 Les Clayes sous Bois (FR)
(72) Inventeur: DEMEILLIEZ, Bruno, 38380 Saint Laurent du Pont (FR); ALVAREZ MARCOS, Jose Ignacio, 69220 Saint Jean d'Ardières (FR); CHAABANE, Wajih, 73000 Chambery (FR)
(74) Mandataire: A.P.I. Conseil

(56) Documents cités:
- US-A1- 2010 192 156
- US-A1- 2015 286 507
- US-A1- 2017 093 962

## Description

La présente invention concerne le domaine des tests de performance d'infrastructures informatiques, et plus particulièrement l'optimisation d'une infrastructure informatique hébergeant une chaine applicative. L'invention porte notamment sur un procédé de recherche de marge d'optimisation permettant d'identifier des ressources sous-utilisées et un dispositif apte à mettre en oeuvre ledit procédé.

### [Art antérieur]

Les infrastructures informatiques représentent une grande partie de l'investissement d'une entreprise. Leurs bonnes gestions est un enjeu stratégique pour pouvoir maîtriser leurs coûts, mais également pour garantir un accès fiable et optimisé aux différentes données métiers du système d'information.

Au fil du temps, les administrateurs de systèmes d'information doivent généralement faire évoluer leur infrastructure informatique de façon à toujours proposer des services applicatifs métiers performants et adaptés à la demande de leur organisation. Par exemple, suite à une augmentation d'un certain groupe d'utilisateurs, il peut y avoir une augmentation de la consommation des ressources par certaines applications métiers et donc il peut être avantageux de réorganiser cette infrastructure informatique. Alternativement, un changement de briques applicatives, une modification d'une brique applicative entrainant une réduction de sa consommation de ressource, ou encore une amélioration d'une infrastructure informatique peuvent entrainer une augmentation des ressources disponibles. Une technique permettant de réduire les ressources matérielles allouées à la prise en charge d'une application logicielle est décrite dans le document US2010/0192156. Cette technique permet lors de l'exécution d'une application de calculer un niveau de service d'application sur la base d'au moins une mesure de ressource matérielle et de comparer le niveau de service à un niveau seuil de service d'application afin de déterminer une sous-utilisation des ressources. Toutefois, cette application ne permet pas une anticipation automatisée de l'utilisation des ressources et nécessite des choix réalisés *a priori,* cette technique étant réalisé lors de l'exécution de l'application.

Il existe des procédés de mesures de performance (« Benchmark » en terminologie anglo-saxonne) ayant pour objectif de dimensionner, en fonction d'une utilisation donnée, une nouvelle infrastructure informatique hébergeant une chaine applicative et d'en valider les performances et l'endurance. Les applications (ou logiciels) de mesure de performance permettent de simuler plusieurs utilisateurs simultanément. Par exemple, l'injecteur est capable d'envoyer vers une infrastructure informatique un très grand nombre de requêtes associées à des scénarios métiers (par exemple au format HTML), comme si elles provenaient d'utilisateurs simultanés différents. Lorsque des mesures de performance sont réalisées, l'objectif est très souvent de déterminer si la chaîne applicative est capable de supporter une charge donnée considérant la configuration des serveurs qui la compose. Les campagnes de test peuvent aussi avoir pour objectif de déterminer les limites de performance d'une infrastructure informatique, c'est-à-dire la charge jusqu'à laquelle elle est capable de fonctionner. Par exemple, via une démarche itérative, il est possible de progressivement monter en charge sur une infrastructure informatique hébergeant une chaine applicative de façon à déterminer à partir de quel moment il y a dépassement de seuil maximum d'utilisation des ressources par la chaine applicative. Cela peut être une démarche dichotomique de façon à trouver la charge maximum que la chaine applicative peut supporter, correspondant à la limite de charge pour la chaine applicative dans l'environnement matériel mis à sa disposition. Une application de ce type est décrite dans le document EP2833267 et permet de rechercher automatiquement la limite de charge maximum pouvant être supportée par une chaîne applicative.

Suite à la mise en place de ces infrastructures informatiques adaptées aux charges anticipées, les administrateurs du système d'information conservent souvent le dimensionnement défini lors de la mise en place et, faute d'outillage et de temps, ils ne cherchent pas à minimiser la mise à disposition des ressources. Ainsi, bien qu'il puisse exister des surveillances visant à la détection d'une possible saturation dans l'usage des ressources, il n'y a généralement pas d'analyse des possibilités d'optimisations de l'utilisation des ressources de façon à identifier et à quantifier un éventuel gaspillage des ressources.

Pourtant, au cours de la vie d'une chaine applicative, il peut arriver que le nombre d'utilisateur diminue ou que le besoin en ressources de la chaine applicative diminue alors que les ressources allouées sont restées inchangées depuis la mise en place de la chaine applicative sur son infrastructure informatique. Cette réduction peut par exemple être observée lorsque des chaines applicatives sont dans une phase progressive de remplacement et que les dimensionnements originaux n'ont pas évolués. De même, au moment du déploiement d'une nouvelle application ou au changement de la charge d'une application existante, au lieu d'investir dans un nouveau matériel, il peut être avantageux de vérifier si l'infrastructure informatique dispose de ressources disponibles pour répondre à ce nouveau besoin sans avoir à réinvestir dans du matériel. En effet, il peut arriver que les ressources allouées à une chaine applicative soient bien supérieures à ses besoins réels. Il pourrait alors être avantageux pour les administrateurs du système d'information (SI) de pouvoir déterminer la configuration minimum matérielle (i.e. en quantité ou niveau de ressources nécessaires) pour une chaine applicative ayant une charge connue (i.e. charge correspondant au niveau d'utilisation de la chaine applicative). Cela permettrait d'optimiser l'utilisation des ressources et également de réduire le coût de l'infrastructure informatique d'une entreprise, tout en garantissant le niveau de qualité de service souhaité.

Ainsi, il existe un besoin pour de nouvelles méthodes ou dispositifs permettant de s'assurer que l'infrastructure informatique dispose d'une quantité de ressource qui soit adaptée au juste besoin de la chaine applicative, de façon à réduire le gaspillage de ressources sous-utilisées.

### [Problème technique]

L'invention a donc pour but de remédier aux inconvénients de l'art antérieur. En particulier, l'invention a pour but de proposer un procédé de recherche de marge d'optimisation de ressource capable de rapidement déterminer quelles ressources pourraient être diminuées sur l'infrastructure informatique tout en conservant une qualité de service à un niveau souhaité. Ledit procédé doit être rapide et simple à mettre en oeuvre, avec un nombre réduit d'étapes. En outre, il doit pouvoir assurer l'administrateur du SI de la capacité des nouveaux niveaux de ressources proposés à permettre un fonctionnement correct de la chaine applicative considérée.

L'invention a également pour but de proposer un dispositif pour la recherche de marge d'optimisation de ressource, ledit dispositif pouvant être configuré de façon à être facilement adapté à l'infrastructure informatique à optimiser.

### [Brève description de l'invention]

A cet effet, l'invention porte sur un procédé de recherche de marge d'optimisation des ressources d'une infrastructure informatique, ladite infrastructure informatique hébergeant une chaine applicative faisant appel à une pluralité de ressources, ledit procédé comportant les étapes suivantes :
- Exécution d'un ensemble de requêtes, ladite exécution de l'ensemble de requêtes simulant le fonctionnement de la chaine applicative,
- Analyse des résultats de l'ensemble de requêtes, ladite analyse comportant une mesure de valeurs de paramètres de qualité de service en réponse à l'exécution de l'ensemble de requêtes et une comparaison des valeurs mesurées de paramètres de qualité de service à des valeurs de seuils prédéterminés de paramètres de qualité de service,

- Analyse de l'utilisation des ressources, ladite analyse comportant une mesure de valeurs d'utilisation de ressources en réponse à l'exécution de l'ensemble de requêtes et une comparaison des valeurs mesurées d'utilisation de ressources à des valeurs de seuil prédéterminé minimum d'utilisation de ressources,
- Identification d'une marge d'optimisation des ressources, ladite identification comportant l'identification d'une ressource sous-utilisée, ladite ressource sous-utilisée étant une ressource dont la valeur d'utilisation de ressource est inférieure à la valeur de seuil prédéterminé minimum d'utilisation de ladite ressource alors que les valeurs mesurées de paramètres de qualité de service sont en adéquation avec les valeurs des seuils prédéterminés de paramètres de qualité de service.

L'invention présente l'avantage de pouvoir identifier une marge d'optimisation des ressources d'une infrastructure informatique hébergeant une chaine applicative. L'objectif d'un administrateur de SI peut être de limiter au strict minimum les ressources allouées à la chaîne applicative hébergée par l'infrastructure informatique. Ainsi, via l'identification d'une marge d'optimisation, la présente invention propose une solution permettant de déterminer la configuration minimum des ressources de l'infrastructure informatique afin qu'elle puisse supporter une charge donnée qui est la charge associée au fonctionnement classique de la chaine applicative. En outre, la configuration minimum des ressources de l'infrastructure informatique permet d'utiliser le moins possible de ressources tout en ne dépassant pas le seuil prédéterminé minimum d'utilisation de ces ressources et tout en respectant des valeurs de seuils prédéterminés de paramètre de qualité de service. L'objectif est donc d'optimiser l'utilisation des ressources tout en garantissant le niveau de service. Cela permet de réduire le coût de l'infrastructure informatique d'une organisation tout en garantissant le niveau de qualité de service souhaité pour les différentes applications du SI.

**Selon d'autres caractéristiques optionnelles du procédé :**
- Il comprend une étape de modification du niveau d'une ressource, de préférence d'une ressource sous-utilisée, avant une réexécution des étapes du procédé de recherche de marge d'optimisation. Ainsi, alors que les systèmes antérieurs font varier la charge, comme par exemple le débit d'injection de requêtes à exécuter par ladite infrastructure informatique, la présente invention fait varier le niveau d'une ressource. De façon préférée, le procédé comprend une étape de réduction du niveau d'une ressource sous-utilisée avant une réexécution des étapes du procédé de recherche de marge d'optimisation.
   Cette étape permet avantageusement d'identifier des niveaux réduits de ressources permettant un fonctionnement correct de la chaine applicative. De façon préférée, ces niveaux réduits correspondent aux valeurs minimales de niveau de ressources permettant le fonctionnement sans dysfonctionnement de la chaine applicative. Cette étape permet aussi identifier les effets/interactions entre la ressource modifiée et les autres ressources disponibles. Il est avantageux de réitérer la charge avec les niveaux réduits de ressources pour évaluer réellement l'effet de la modification du niveau de la ressource. En effet, l'effet n'est pas linéaire et étant donné la complexité des SI et l'imbrication des ressources, la modification du niveau d'une ressource pourra avoir des répercussions sur d'autres ressources.

- Les étapes du procédé sont répétées jusqu'à ce que les valeurs mesurées d'utilisation de chacune des ressources soient comprises entre la valeur de seuil prédéterminé minimum d'utilisation de la ressource et une valeur de seuil prédéterminé maximum d'utilisation de la ressource. Cela peut impliquer de nombreuses modifications des niveaux de ressources et la sélection de plusieurs niveaux réduits. Ainsi, ce procédé est en mesure de progresser au fur et à mesure de l'exécution des ensembles de requêtes de façon à améliorer la justesse des marges d'optimisation calculée et permet l'identification de niveaux réduits de ressources.
- Il comprend la mise en oeuvre d'un script permettant de contrôler automatiquement le niveau de la ressource. La mise en oeuvre d'un script permet de réaliser la modification de niveau de la ressource, évite à un utilisateur d'intervenir et permet d'accélérer l'identification d'une marge d'optimisation. Le script pourra comporter toutes les commandes nécessaires aux modifications du niveau de la ressource et pourra notamment redémarrer la chaine applicative si nécessaire.
- Si la ressource à modifier nécessite une intervention manuelle pour sa modification, il comprend la génération d'une alerte comportant un identifiant de la ressource dont le niveau est à modifier et une instruction sur le niveau à atteindre. En effet, le niveau de certaines ressources ne peut être modifié via un script et une telle alerte permet à un opérateur de disposer de toutes les informations nécessaires à la modification manuelle du niveau de la ressource considérée.
- Il comprend, si plusieurs ressources sous-utilisées ont été identifiées, une étape de sélection d'une ressource sous-utilisée. En effet, lorsque plusieurs ressources sont à modifier, il est préférable de sélectionner une seule ressource à modifier.
- Chacune des ressources est associée à un paramètre de priorité et l'étape de sélection de la ressource sous-utilisée prend en compte la valeur du paramètre de priorité de chacune des ressources sous-utilisées. En effet, la valeur du paramètre de priorité de chacune des ressources permet de quantifier ou qualifier l'impact d'une modification du niveau de ladite ressource sur le reste des ressources. En effet, la modification du niveau de certaines ressources entraine une modification du comportement d'autres ressources. Ainsi, il convient de modifier en premier lieu le niveau des ressources pouvant avoir un impact sur les autres ressources.
- La valeur du niveau modifié d'une ressource est calculée en fonction de la différence entre la valeur mesurée d'utilisation de la ressource, une valeur du seuil prédéterminé maximum d'utilisation de la ressource et une valeur de pas de la ressource. En effet, chacune des ressources peut être associée à une valeur de pas de ressource et dans ce cas une modification ne sera pas inférieure à la valeur de pas de ressource et pourra être égale à un ou plusieurs pas de ladite ressource.
- Il comprend une étape de modification du niveau d'une ressource dont le niveau d'utilisation dépasse le seuil prédéterminé maximum d'utilisation avant une réexécution des étapes du procédé d'optimisation. En effet, après la modification du niveau de ressource, il peut arriver que suite à l'exécution de l'ensemble de requêtes, un seuil prédéterminé maximum d'utilisation soit dépassé. Dans ce cas, une nouvelle modification consistant à augmenter le niveau de la ressource concernée peut permettre d'éviter un nouveau dépassement.
- Si les valeurs mesurées de paramètres de qualité de service ne sont pas en adéquation avec les valeurs seuil de paramètres de qualité de service, il comprend une étape d'identification d'une ressource responsable d'une détérioration de la qualité de service. Par exemple, il convient dans ce cas de ré-augmenter le niveau de la ressource préalablement réduite. L'origine du non-respect des valeurs seuil de paramètres de qualité de service étant généralement la saturation de cette ressource.
- Si les valeurs mesurées de paramètre de qualité de service sont en adéquation avec les valeurs seuils de paramètre de qualité de service et les valeurs d'utilisation de ressources sont supérieurs aux valeurs de seuils minimum d'utilisation, il comprend une étape de génération d'un bilan comportant des valeurs de niveau réduit de ressource pour l'infrastructure informatique hébergeant la chaine applicative. Ainsi, le procédé permet de déterminer, de manière automatisée, les niveaux de ressources réduits d'une infrastructure informatique. Les niveaux réduits de ressources sont par exemple les plus faibles niveaux de ressources ne présentant pas de risque de dysfonctionnement.

L'invention porte en outre sur dispositif de recherche de marge d'optimisation des ressources d'une infrastructure informatique hébergeant une chaine applicative, ledit dispositif comportant :
- Un module d'injection, apte à exécuter un ensemble de requêtes, ladite exécution de l'ensemble de requêtes simulant le fonctionnement de la chaine applicative,
- Un module de suivi du niveau de service apte à analyser des résultats de l'ensemble de requêtes, à mesurer des valeurs de paramètres de qualité de service en réponse à l'exécution de l'ensemble de requêtes et à comparer des valeurs mesurées de paramètres de qualité de service à des valeurs de seuils prédéterminés de paramètres de qualité de service,
- Un module de suivi de ressources apte à analyser l'utilisation des ressources, à mesurer des valeurs d'utilisation de ressources en réponse à l'exécution de l'ensemble de requêtes et à comparer les valeurs mesurées d'utilisation de ressources à des valeurs de seuils prédéterminés minimum d'utilisation de ressources, de façon préférée il est également apte à comparer les valeurs mesurées d'utilisation de ressources à des valeurs de seuils prédéterminés maximum d'utilisation de ressources, et
- Un module d'optimisation de ressource apte à identifier une marge d'optimisation des ressources, ladite identification comportant l'identification d'une ressource sous-utilisée, ladite ressource sous-utilisée étant une ressource dont la valeur d'utilisation de ressource est inférieure à la valeur de seuil prédéterminé minimum d'utilisation de ladite ressource alors que les valeurs mesurées de paramètres de qualité de service sont en adéquation avec les valeurs des seuils prédéterminés de paramètres de qualité de service.

D'autres avantages et caractéristiques de l'invention apparaitront à la lecture de la description suivante donnée à titre d'exemple illustratif et non limitatif, en référence aux Figures annexées qui représentent :
- Figure 1, la progression dans le temps de la quantité de requêtes principales envoyées à une chaine applicative et le nombre d'utilisateurs de cette chaine applicative ;
- Figure 2, une représentation schématique d'un procédé de recherche de marge d'optimisation selon l'invention. Les étapes encadrées par des pointillés sont facultatives ;
- Figure 3, une représentation schématique d'un mode de réalisation du procédé de recherche de marge d'optimisation selon l'invention ;
- Figure 4, une représentation schématique d'un mode de réalisation du procédé de recherche de marge d'optimisation selon l'invention comportant la sélection d'une ressource sous-utilisée dont le niveau est modifié ;
- Figure 5, une représentation schématique d'un mode de réalisation du procédé de recherche de marge d'optimisation selon l'invention comportant la sélection d'une ressource surutilisée dont le niveau est modifié ;
- Figures 6A et 6B, des représentations schématique de modes de réalisation du procédé de recherche de marge d'optimisation selon l'invention comportant respectivement une étape de validation ou une étape d'endurance ;
- Figure 7, une représentation schématique d'un dispositif de recherche de marge d'optimisation de ressource selon un mode de réalisation de l'invention.

### [Description de l'invention]

Dans le cadre de l'invention, on entend par « **ressource** », des paramètres, des capacités ou des fonctions de dispositifs informatiques permettant le fonctionnement d'une chaine applicative. Une même chaine applicative est associée à plusieurs ressources. Une ressource est généralement associée à un identifiant unique permettant de l'identifier au sein d'une structure informatique. Par exemple, le terme « ressource » peut inclure : un disque réseau, un réseau, un processeur ou encore une mémoire vive.

Par « **niveau d'une ressource** », on entend au sens de l'invention une quantité de ressource. Par exemple, cela peut correspondre pour des disques réseaux au nombre de disques réseaux disponibles ou à la quantité de mémoire disponible sur ces disques réseaux, pour un processeur au nombre de coeurs ou au nombre de processeurs ou à la dimension des caches, pour une mémoire vive à la quantité disponible, et pour des ports, le nombre de ports pouvant être ouverts simultanément. Le niveau initial d'une ressource correspond à la quantité de ressource disponible sur l'infrastructure informatique pour la chaine applicative tandis que le niveau réduit d'une ressource correspond à la quantité de ressource disponible après une étape de modification selon l'invention. Le « **pas d'une ressource** » peut être d'une part la quantité minimale de ressource pouvant être ajoutée ou soustraite lors qu'une étape de modification et d'autre part un multiple de la modification pouvant subir le niveau de ladite ressource. Certaines ressources présentent une granulométrie élevée (e.g. serveurs) alors que d'autre présentent une granulométrie faible (e.g. mémoire vive disponible). Dans le cadre de l'invention, un utilisateur peut définir le pas d'une ressource en fonction de la granulométrie de la ressource ou plus particulièrement de l'infrastructure informatique considérée.

Par « **valeur d'utilisation d'une ressource** », on entend au sens de l'invention une valeur représentative de la consommation ou de l'occupation de ladite ressource lors du fonctionnement de la chaine applicative. Par exemple, la valeur d'utilisation peut correspondre pour des disques réseaux à leurs entrées/sorties, la lecture/écriture sur des disques, le taux d'utilisation de la mémoire, pour un réseau à sa bande passante, pour des processeurs à leur utilisation (en pourcent) ou au taux d'occupation des caches, pour de la mémoire vive la quantité utilisée et pour des ports, le nombre de ports ayant été ouverts simultanément lors du fonctionnement du procédé. La valeur d'utilisation est avantageusement ramenée au pourcentage du niveau de la ressource.

Par «**seuil prédéterminé maximum d'utilisation** », on entend au sens de l'invention une valeur maximale de paramètre associé à chaque ressource permettant un fonctionnement adéquat de ladite ressource. Par exemple, cela correspond aux limites maximales acceptables de consommations de ressources pour une structure informatique hébergeant une chaine applicative. Ces limites peuvent être réelles ou hypothétiques et correspondent généralement à une valeur ou un niveau d'utilisation au-delà duquel des dysfonctionnements peuvent survenir avec pour conséquence un arrêt de la ressource, de la structure informatique ou bien des baisses de qualités de service. Ce seuil peut être prédéterminé par un utilisateur via un fichier de configuration et une Interface Homme-Machine (IHM). Le terme « **dysfonctionnement** » au sens de l'invention correspond à la survenue d'un incident matériel ou d'une congestion sur l'infrastructure informatique.

Par « **seuil prédéterminé minimum d'utilisation** », on entend au sens de l'invention une valeur minimale d'utilisation en dessous de laquelle il peut être considéré qu'une ressource est gaspillée ou sous utilisée. Il y a avantageusement un seuil prédéterminé minimum d'utilisation pour chaque ressource ou chaque paramètre d'une ressource. Ce seuil peut être prédéterminé par un utilisateur via un fichier de configuration et une Interface Homme-Machine (IHM).

L'expression « **qualité de service »** ou niveau de service au sens de l'invention correspond à une appréciation de la qualité du service rendu par la chaine applicative. L'expression « **paramètre de qualité de service** » au sens de l'invention correspond à des critères subjectifs ou objectifs tels que des temps de latence d'un processus, des pertes de paquets, des débits, des valeurs d'utilisation de ressources et des temps de réponse par requête. Ainsi, il y a généralement une pluralité de paramètres de qualité de service. Il peut notamment y avoir un temps de réponse seuil différent pour chacune des requêtes différentes ou bien un temps de réponse global.

L'expression « **seuil prédéterminé de paramètre de qualité de service** » au sens de l'invention correspond à une valeur de paramètre à laquelle peut s'engager un tiers afin de garantir de bonnes performances pour les applications critiques d'une organisation et tel que cela peut être définit dans un accord de niveau de service. Par exemple, un seuil peut être du type : tous les temps de réponses sont à moins de 3 secondes. Néanmoins, il peut être avantageux de disposer de seuils détaillés en fonction des actes métiers. Par exemple, une requête mettant en oeuvre une impression de fichier peut présenter un seuil de temps de réponse plus élevé qu'une requête comportant l'affichage d'une page internet. Les seuils prédéterminés de paramètres de qualité de service peuvent inclure également des seuils prédéterminés maximum d'utilisation.

Par « **infrastructure informatique** », on entend au sens de l'invention un ensemble de structures informatiques (i.e. dispositifs informatiques) ou de machines apte à faire fonctionner une ou plusieurs applications métiers ou chaines applicatives. La structure informatique peut être un serveur ou comporter une pluralité de machines.

L'expression « **chaine applicative** » au sens de l'invention correspond à un ensemble d'applications, reliées entre elles par un flot d'information et visant à proposer, au travers de plusieurs processus, une ou plusieurs fonctionnalités correspondant au besoin métier d'une organisation. L'expression « brique applicative » au sens de l'invention correspond à une composante d'une application. La combinaison de briques applicatives est souvent nécessaire pour le fonctionnement d'applications, notamment d'applications métier, comme par exemple une application Web, une plateforme de partage de contenu ou une plateforme de calcul. Les briques applicatives de l'infrastructure informatique incluent, par exemple, un serveur ftp, un serveur de messagerie électronique, un serveur d'application Java et/ou une ou plusieurs bases de données.

Par « **sonde** » ou « sonde informatique », on entend au sens de l'invention un logiciel associé à un équipement qui permet d'effectuer, de gérer et faire remonter vers un équipement informatique des mesures destinées à informer entre autres des valeurs de paramètres de qualité de service, de l'état de fonctionnement des ressources ou de l'utilisation de ressources.

L'expression « **interface homme-machine** » au sens de l'invention correspond à tout élément permettant à un être humain de communiquer avec un ordinateur en particulier et sans que cette liste soit exhaustive, un clavier et des moyens permettant en réponse aux ordres entrés au clavier d'effectuer des affichages et éventuellement de sélectionner à l'aide de la souris ou d'un pavé tactile des éléments affichés sur l'écran. Un autre exemple de réalisation est un écran tactile permettant de sélectionner directement sur l'écran les éléments touchés par le doigt ou un objet et éventuellement avec la possibilité d'afficher un clavier virtuel.

Par « **fichier de commande de charge** », on entend au sens de l'invention un fichier de configuration de la charge ou de la contrainte à appliquer à une structure informatique. Le fichier de configuration peut par exemple être un fichier, ou un ensemble de fichiers, qui permet d'associer plusieurs données ou champs. Un tel fichier de commande de charge est, par exemple, un fichier XML, un fichier CSV, un fichier INI, un fichier JSON.... Un fichier de commande de charge peut comporter un ou plusieurs enregistrements de configuration. Il peut être généré à partir d'information renseignées par un utilisateur.

Dans la suite de la description, les mêmes références sont utilisées pour désigner les mêmes éléments.

Au fil du temps, il peut arriver un moment où une chaine applicative disposera d'une quantité de ressource bien supérieure à ses besoins réels. Or, ce gaspillage de ressources représente un coût de gestion et une perte d'opportunité de réallouer ces ressources supplémentaires à d'autres chaines applicatives en besoin. La présente invention permet de rechercher automatiquement la configuration minimale de l'infrastructure informatique d'une chaîne applicative afin si possible d'en réduire le coût financier. Elle est basée sur l'identification des ressources sous-utilisées notamment lors de l'exécution d'un ensemble de requêtes correspondant à un tir à un niveau de charge souhaité.

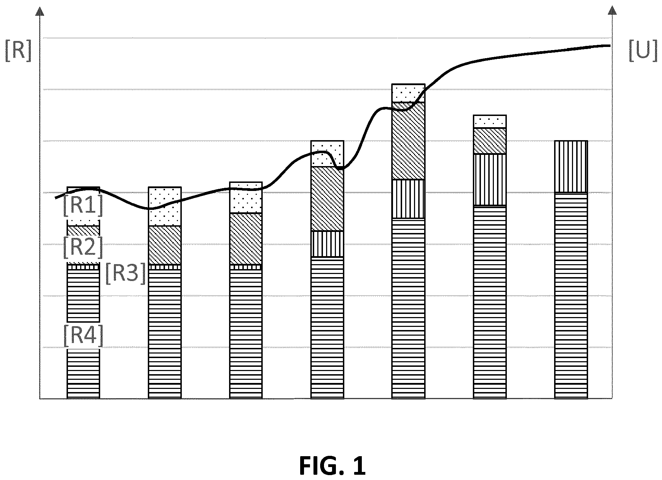

La **Figure 1** illustre une évolution possible, étalée sur plusieurs trimestres, de la quantité de requêtes reçues par une chaine applicative au fil d'une modification de politique de la direction des systèmes d'informations. Dans cet exemple, le nombre d'utilisateurs augmente au fil du temps (courbe en trait plein) et le nombre ainsi que la pondération des principaux actes métiers qu'elle a à gérer quotidiennement sont significativement modifiés. Il est possible d'observer que le nombre de requêtes [R1] et [R2], correspondant à des opérations de type réception, émission de données puis traitement, sont maintenant quasi nulles alors que le nombre de requêtes [R3] et [R4] de consultation et modification sont en augmentation. Ainsi, le nombre global de requêtes a augmenté et la distribution de ces requêtes a été modifiée. Il est donc possible que l'utilisation de ressources par cette chaine applicative ne corresponde plus à l'utilisation en ressources envisagée lors de la mise en place de cette chaine applicative. Maintenir une infrastructure informatique pour cette chaine applicative en l'état pourrait conduire à un gaspillage de ressources ou à des perturbations de fonctionnement. Ainsi, il est nécessaire de pouvoir proposer un procédé de recherche d'une marge d'optimisation des ressources de cette infrastructure informatique.

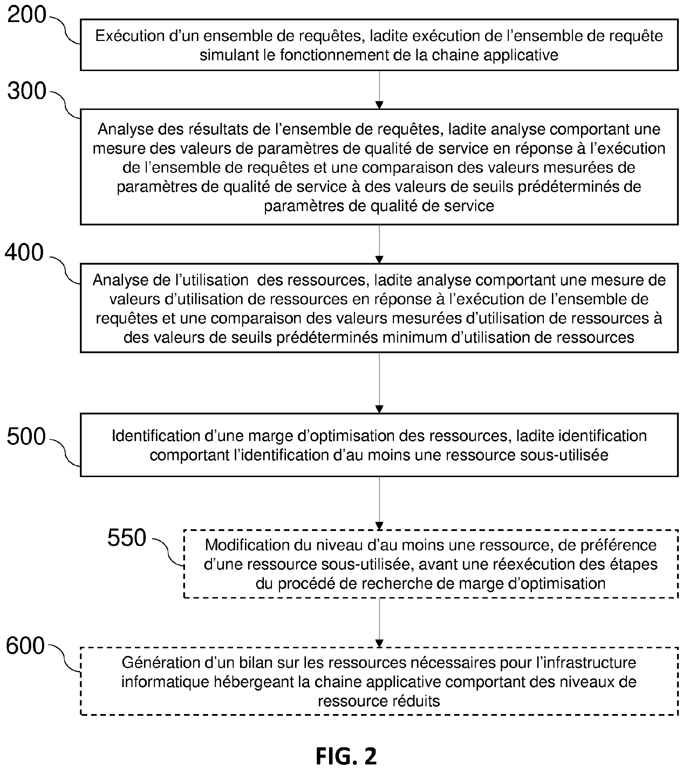

Les inventeurs ont développé un **nouveau procédé de recherche de marge d'optimisation des ressources d'une infrastructure informatique.** Ce procédé permet avantageusement d'identifier quelles sont les ressources qui sont sous-utilisées par une chaine applicative. La **figure 2** illustre schématiquement un procédé de recherche de marge d'optimisation des ressources selon l'invention.

Comme cela est présenté dans la figure 2, le procédé de recherche selon l'invention comprend une première **étape 200 d'exécution d'un ensemble de requêtes.** Cette exécution d'un ensemble de requête permet de simuler le fonctionnement de la chaine applicative. En effet, de façon à identifier les ressources sous-utilisées, il est nécessaire de pouvoir simuler un fonctionnement classique de la chaine applicative. Cet ensemble de requêtes peut aussi être appelé un tir et la répétition de plusieurs exécutions d'un ensemble de requêtes peut être appelée une campagne de tirs. Cette étape peut être réalisée par un module d'injection 20 qui sera présenté par la suite.

Au cours du procédé selon l'invention, pour simuler le fonctionnement de la chaine applicative, il n'est pas nécessaire de reproduire l'exhaustivité des actions ou requêtes prises en charge par ladite chaine applicative lors de son utilisation courante. Ainsi, l'ensemble de requêtes peut se limiter à la simulation des principaux scénarios métiers, c'est à dire ceux ayant un impact significatif sur les ressources de l'infrastructure informatique. Par exemple, comme présenté en figure 1, l'activité de la chaine applicative a été résumée en quatre scénarios métiers principaux [R1] à [R4] qui représentent à eux seuls l'essentiel de la charge d'une chaine applicative.

Ainsi, un fichier d'instruction de charge comporte avantageusement des valeurs sur les paramètres suivants : les différents types de scénario, la pondération de chacun de ces scénarios métiers (c'est-à-dire la proportion relative des uns par rapport aux autres), et le niveau de charge globale (c'est-à-dire la volumétrie cible ou le débit de requêtes souhaité au cours du procédé). De façon équivalente, il peut comporter des informations sur le nombre de scénarios de chaque type exécutés en simultané, par exemple pendant une heure. Il peut aussi comporter des informations sur l'infrastructure informatique testée.

L'ensemble de requêtes est généralement enregistré dans un fichier de commande de charge comportant le code devant être exécuté. L'exécution du fichier de commande de charge peut produire un certain nombre d'actions aussi diverses que la création, la consultation, la modification, la suppression de fichiers ou l'impression, la copie, l'affichage de données. Ces actions seront généralement similaires aux actes métiers principaux pris en charge par la chaine applicative. Ainsi, le procédé selon l'invention peut également comporter une étape de chargement d'un fichier de commande de charge.

Dans le cadre de la présente invention, étant donné l'objectif du procédé selon l'invention, tous les tirs réalisés dans le cadre du procédé sont, de façon préférée, identiques (excepté éventuellement les tirs optionnels 820). Le premier tir ainsi que les suivants se feront de façon à simuler le fonctionnement classique de la chaine applicative. Un scénario est composé de plusieurs requêtes différentes, c'est-à-dire de plusieurs actes métiers, qui sont répétées un certain nombre de fois pour mimer une utilisation courante de la chaine applicative. Ainsi, la simulation peut être considérée comme une approximation de la charge que subit habituellement l'infrastructure informatique mettant en oeuvre la chaine applicative.

Les tirs sont avantageusement mis en oeuvre lorsque l'infrastructure est peu mise à contribution par les utilisateurs comme par exemple la nuit ou les fins de semaines. Eventuellement, le lancement de l'exécution de l'ensemble de requêtes (i.e. du tir) peut être accompagné par une sauvegarde des paramètres de tir et des valeurs de niveau de ressources. Ainsi, il est possible d'initialiser un fichier de suivi pour stocker des éléments relatifs à la recherche.

En outre, cette étape 200 peut comporter l'ouverture d'un fichier comportant une liste de paramètres de qualité de service à analyser ainsi que des seuils prédéterminés de qualité de service. En effet, comme cela est détaillé par la suite, l'objectif de l'exécution de l'ensemble de requêtes, ou tir, est notamment d'analyser le comportement de l'infrastructure informatique.

Ainsi, le procédé selon l'invention comporte également une **étape 300 d'analyse des résultats de l'ensemble de requêtes.** Cette analyse comporte avantageusement une mesure 310 des valeurs de paramètres de qualité de service en réponse à l'exécution de l'ensemble de requêtes et une comparaison 320 des valeurs mesurées de paramètres qualité de service à des valeurs seuil de paramètre de qualité de service. Cette étape 300 d'analyse des résultats de l'ensemble des requêtes peut être réalisée par un module 30 de suivi de niveau de service qui sera présenté par la suite.

Le procédé selon l'invention peut faire appel à une sonde 90 ou à une pluralité de sondes 90 pour mesurer les valeurs des paramètres de qualité de service. La ou les sondes permettent de collecter des données sur les paramètres de qualité de services et plus particulièrement leurs valeurs au cours de l'exécution 200. Plusieurs valeurs de paramètres de qualité de service peuvent être mesurées en parallèle. Ces mesures des valeurs de paramètre de qualité de service peuvent être réalisées à partir de sondes de type « Nigel's Monitor » (Nmon) ou « Performance Monitor » (Perfmon).

L'étape 300 permet de vérifier que, lors de l'exécution 200, les seuils prédéterminés de paramètres de qualité de service ont été respectés. Le procédé selon l'invention peut comporter une étape préalable de sélection des paramètres de qualité de service qui seront à prendre en considération lors du procédé. Cette étape préalable peut par exemple mettre en oeuvre une interface de type IHM par l'intermédiaire de laquelle un utilisateur pourra sélectionner les paramètres de qualité de service devant être surveillés ainsi que les seuils applicables. Le procédé pourra alors générer un fichier de configuration de paramètre de qualité de service comportant ces informations et pouvant être utilisé dans le cadre du procédé.

En outre, les résultats de telles mesures peuvent être mémorisés dans une mémoire 80 par exemple sous la forme d'au moins un tableau matriciel comportant pour chaque tir réalisé, les niveaux de ressources (réduits et/ou initiaux) et les valeurs de paramètre de qualité de service suivi. Ces tableaux peuvent également comporter les valeurs d'utilisation des ressources.

Les paramètres de qualité de service peuvent par exemple être sélectionnés parmi : des temps de latence d'un processus, des pertes de paquets, des débits, des valeurs d'utilisation de ressources et des temps de réponse par requête, des temps de réponse par type d'acte métier, des temps d'exécution de certains traitements (tel que des traitements par batch) et des niveaux d'utilisation maximum des différentes ressources des différents serveurs.

Le procédé selon l'invention comporte également une **étape 400 d'analyse de l'utilisation des ressources.** Cette analyse comporte une mesure 410 de valeurs d'utilisation de ressources en réponse à l'exécution de l'ensemble de requêtes et une comparaison 420 des valeurs mesurées d'utilisation de ressources à des valeurs de seuil prédéterminé minimum d'utilisation de ressources. Cette étape 400 peut être réalisée par un module 40 d'analyse d'utilisation de ressources qui sera présenté par la suite.

Cette étape permet de vérifier que, lors de l'exécution 200, l'utilisation des ressources a été optimale. C'est-à-dire par exemple comprise entre un seuil prédéterminé maximum d'utilisation et un seuil prédéterminé minimum d'utilisation. Les ressources pouvant être suivies sont par exemple : consommation CPU, mémoire, I/O disque et nombre de ports pouvant être ouverts simultanément. Le procédé selon l'invention peut comporter une étape préalable de sélection des ressources qui seront à prendre en considération lors de procédé. Cette étape préalable peut par exemple mettre en oeuvre d'une IHM par l'intermédiaire de laquelle un utilisateur pourra sélectionner les ressources pouvant potentiellement être optimisées et renseigner des informations relatives à ces ressources. Le procédé pourra alors générer un fichier de configuration des ressources comportant ces informations et pouvant être utilisé dans le cadre du procédé.

Le procédé selon l'invention peut faire appel à une sonde 90 ou à une pluralité de sondes 90 pour mesurer les valeurs d'utilisation des ressources, par exemple sous la forme de pourcentage du niveau de la ressource. Cela peut être également des valeurs brutes qu'il faudra ensuite mettre en relation avec des limites maximum d'utilisations de la ressource. Plusieurs valeurs d'utilisation des ressources peuvent être mesurées en parallèle. Ces mesures de la consommation des ressources peut être réalisées à partir de sondes de type « Nigel's Monitor » (Nmon) ou « Performance Monitor » (Perfmon).

Le procédé peut aussi comprendre une étape de mémorisation des valeurs mesurées d'utilisation des ressources lors de l'exécution 200 de l'ensemble des requêtes. Les résultats des mesures peuvent être mémorisés dans une mémoire 80 sous la forme par exemple d'au moins un tableau matriciel comportant pour chaque tir réalisé, les niveaux ressources et les valeurs d'utilisation des ressources (réduits et/ou initiaux). Ces informations peuvent, de préférence, se retranscrire sous la forme d'une matrice où chaque colonne de la matrice représentant une ressource de la machine (CPU, RAM, ....etc.), chaque ligne une information sur la ressource.

Le tableau 1 ci-dessous illustre une telle matrice.

**Tableau 1**

| | CPU | Débit réseau | Mémoire vive |
|---|---|---|---|
| **Valeurs mesurées d'utilisation** | 20% | 350 Kbps | 20% |
| **Seuils prédéterminés maximum d'utilisation** | 70% | 1000 Kbps | 70% |
| **Seuils prédéterminés minimum d'utilisation** | 30 % | NA | 40 % |

De façon générale, pendant un tir, il y a un suivi en continu du comportement de l'infrastructure informatique. Ainsi, avantageusement, le mécanisme de sondes est démarré avant chaque tir permettant de mesurer pendant toute la durée du tir un certain nombre de ressources et de paramètres de qualité de service qui peuvent être différents en fonction des cas. Cela permet d'une part d'identifier rapidement des dégradations des performances (telles que les temps de réponse) au-delà d'une limite prédéterminée et de d'identifier des ressources ayant une valeur d'utilisation inférieure à un seuil prédéterminé minimum d'utilisation et donc que la ressource est sous-utilisée.

Le procédé selon l'invention comporte aussi une **étape 500 d'identification d'une marge d'optimisation des ressources.**

Cette étape peut avantageusement comporter l'identification, de préférence via un identifiant unique, d'une ressource sous-utilisée. La ressource sous-utilisée est généralement une ressource dont la valeur d'utilisation de ressource est inférieure à la valeur de seuil prédéterminé minimum d'utilisation de ladite ressource et ce alors que les valeurs mesurées de paramètre de qualité de service sont en adéquation avec les valeurs seuil de paramètre de qualité de service. Les valeurs mesurées de paramètre de qualité de service sont en adéquation avec les valeurs seuil de paramètre de qualité de service lorsqu'elles n'ont pas franchi les seuils prédéterminés. Par exemple, lorsque le temps de réponse d'une requête est resté inférieur au seuil prédéterminé de paramètre de qualité de service pour le temps de réponse à cette requête.

Cette étape 500 d'analyse des résultats de consommation des ressources peut être réalisée par un module 50 d'optimisation de ressources qui sera présenté par la suite.

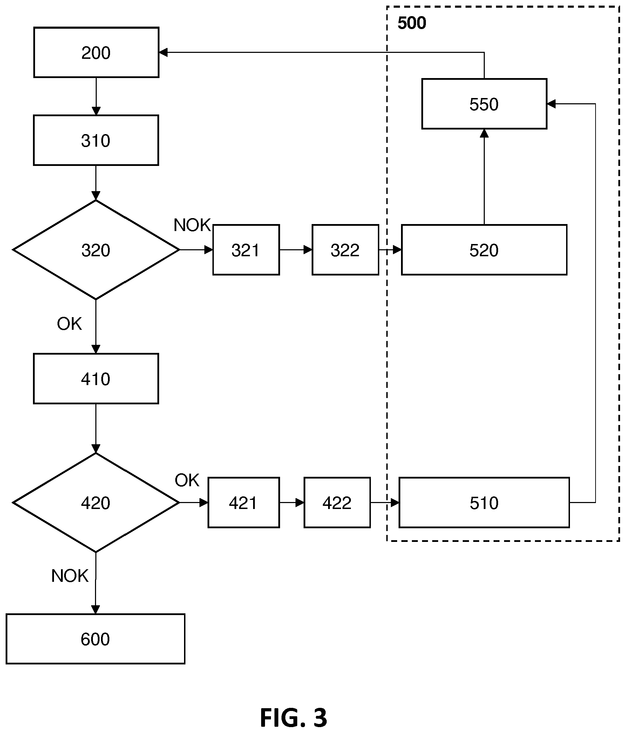

Comme présenté en figures 2 et en **figure 3****,** le procédé selon l'invention peut avantageusement comporter une **étape 550 de modification du niveau d'une ressource** avant une réexécution des étapes du procédé de recherche de marge d'optimisation. En effet, lorsque le procédé permet d'identifier une marge d'optimisation des ressources, il comporte une étape permettant de mettre en oeuvre de façon automatisée, par exemple via un script, ladite modification ou l'optimisation puis de ré-exécuter l'ensemble de requêtes de façon à déterminer si la chaine applicative peut effectivement fonctionner de façon efficace suite à la modification de ses ressources. Le niveau de ressource qui pourra être modifié peut par exemple être sélectionné parmi : le nombre de CPU alloués, la quantité de mémoire disponible et le nombre de ports pouvant être ouverts simultanément.

De façon préférée, le niveau d'une seule ressource est modifié à ce stade. En effet, la modification d'une seule ressource à la fois permet de mieux identifier les conséquences de cette modification sur la qualité de service de la chaine applicative ainsi que sur l'utilisation des ressources. Idéalement, une seule ressource est modifiée à la fois et cette ressource est modifiée de façon itérative jusqu'à ce que sa valeur d'utilisation lors de l'exécution de l'ensemble des requêtes soit supérieure au seuil prédéterminé minimum d'utilisation, inférieure au seuil prédéterminé maximum d'utilisation et que les seuils de paramètres de qualité de service soient respectés.

La modification du niveau de la ressource peut se faire selon le pas de la ressource. Dans ce cas, le niveau de ladite ressource est modifié en soustrayant ou ajoutant au moins un pas de cette ressource à sa valeur actuelle de niveau de ressource. L'ampleur de la modification du niveau d'une ressource est alors égale à un ou plusieurs pas de ladite ressource.

Ainsi, comme présenté en figure 3, l'étape 550 de modification du niveau d'une ressource peut être précédée par l'arrêt 321, 421 de l'exécution de l'ensemble de requêtes (i.e. du tir), éventuellement d'une sauvegarde 322, 422 des valeurs mesurées, puis d'une identification 510, 520 d'une ressource dont le niveau pourra être modifié lors de l'étape 550. Il est en outre possible d'émettre un message d'alerte vers un utilisateur (un courriel, un message graphique, un son ou autre).

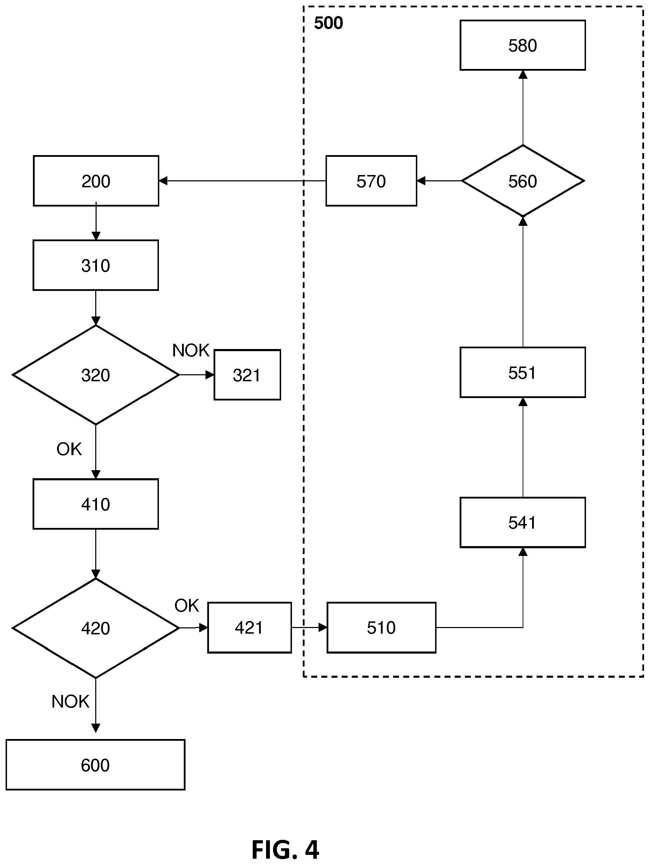

Comme cela est détaillé en **figure 4****,** le procédé selon l'invention comporte avantageusement une étape 541 de sélection d'une ressource sous-utilisée dont le niveau sera modifié. En effet, comme cela a déjà été mentionné, il est préférable de modifier un seul niveau de ressources à la fois.

Plusieurs méthodes peuvent être utilisées pour la sélection de la ressource sous-utilisée à modifier. Il est par exemple possible de sélectionner dans un premier temps la ressource ayant le plus fort écart entre sa valeur actuelle d'utilisation et son seuil prédéterminé minimum d'utilisation.

Néanmoins, comme cela a déjà été spécifié, l'utilisation de ressources par une chaine applicative sur une infrastructure informatique n'est pas un phénomène linéaire et des interactions entre ressources peuvent induire une non-linéarité de comportement de l'infrastructure informatique. Par exemple, une réduction de la mémoire vive peut entrainer une augmentation du nombre d'accès I/O disque.

Ainsi avantageusement, chacune des ressources est associée à un paramètre de priorité. Le paramètre de priorité peut par exemple être une valeur spécifiant l'impact que la modification de cette ressource pourrait avoir sur le reste des ressources de la structure informatique. De façon préférée, l'étape de sélection de la ressource sous-utilisée dont le niveau est à modifier prend en compte la valeur du paramètre de priorité de chacune des ressources sous-utilisées dont le niveau est à modifier.

Comme cela est détaillé en figure 4, le procédé selon l'invention peut comprendre une étape 551 de réduction du niveau d'une ressource sous-utilisée avant une réexécution des étapes du procédé de recherche de marge d'optimisation. De façon avantageuse, une seule ressource sous-utilisée est modifiée.

La réduction du niveau peut être faite arbitrairement. Par exemple, il est possible de partir d'une valeur de réduction maximale pour l'abaisser au fur et à mesure jusqu'à ce que l'infrastructure réponde conformément à un comportement attendu. Par exemple encore, il est possible de partir d'une valeur de réduction minimale, et de l'augmenter au fur et à mesure jusqu'à ce que l'infrastructure ne réponde plus conformément à ce comportement.

Avantageusement, l'ampleur de la modification du niveau de la ressource est calculée en fonction de la différence entre la valeur mesurée d'utilisation de la ressource et le seuil prédéterminé minimum d'utilisation de la ressource ou le seuil prédéterminé maximum d'utilisation de la ressource. Il en résulte des résultats plus précis et obtenus plus rapidement. Le cycle de production industrielle de l'infrastructure s'en trouve réduit.

Le tableau 2 ci-dessous vient illustrer les paramètres évoqués.

**Tableau 2**

| | CPU | Débit réseau | Mémoire vive |
|---|---|---|---|
| **Valeurs mesurée d'utilisation** | 20% | 350 Kbps | 20% |
| **Seuils prédéterminés maximum d'utilisation** | 70% | 1000 Kbps | 70% |
| **Seuils prédéterminés minimum d'utilisation** | 30 % | NA | 40 % |
| **Niveau de la ressource (i.e. niveau initial)** | 4 CPU | NA | 64 Go |
| **Pas de la ressource** | 1 CPU | NA | 8 Go |
| **Paramètre de priorité** | 2 | NA | 4 |
| **Paramètres de modification** | Script CPU | NA | Script mémoire vive |

Le niveau de certaines ressources pourra être modifié automatique dans le cadre du procédé de l'invention sans une intervention extérieure. En effet, certaines ressources pourront être modifiées par l'intermédiaire de scripts exécutés sur l'infrastructure informatique et aptes à limiter l'accès à une partie des ressources. Néanmoins, toutes les ressources ne pourront pas être ainsi modifiées par une action logicielle et certaines ressources nécessiteront l'intervention d'un opérateur capable de modifier physiquement l'infrastructure informatique de façon à réduire le niveau de la ressource. Enfin, d'autres ressources n'ont pas à être modifiées. C'est par exemple le cas du débit réseau qui de façon préférée ne comportera pas de seuil prédéterminé minimum d'utilisation car il n'est généralement pas utile de l'optimiser. De façon générale, les ressources ne pouvant pas être optimisées ne comporte pas de seuil prédéterminé minimum d'utilisation.

Ainsi, comme présenté en figure 4, le procédé selon l'invention comporte une étape 560 de détermination d'un mode de modification de la ressource. Pour cela, chaque ressource peut être associée à une information concernant la méthode de modification de ladite ressource. Pour chacune des ressources, le procédé peut faire appel à un fichier comportant des métadonnées permettant de savoir par exemple si la ressource est modifiable, quels sont les scripts à appeler pour modifier la ressource, et si ladite ressource nécessitera un redémarrage de la machine ou bien si la modification à chaud est possible.

Comme présenté en figure 4, le procédé selon l'invention peut comprendre une étape 570 de génération d'un script permettant de modifier le niveau de la ressource. L'exécution du script sur l'infrastructure informatique 1 permettra de modifier la quantité de ressource 3 disponible pour la chaine applicative 2.

Les ressources pouvant être facilement modifiées, par exemple par l'intermédiaire de script dédié, sont typiquement : configuration CPU d'une machine, configuration mémoire d'une machine et nombre de ports pouvant être ouverts simultanément.

Alternativement, le procédé selon l'invention peut comprendre une étape 580 de génération d'une alerte, ladite alerte comportant un identifiant de la ressource dont le niveau est à modifier et une instruction sur le niveau à atteindre. Lorsque la ressource à modifier nécessite une intervention manuelle pour sa modification, cela permet à un opérateur de modifier manuellement la quantité de ressource disponible pour la chaine applicative.

Suite à ces modifications de niveau d'une ressource, le procédé engage une nouvelle exécution 200 de l'ensemble de requêtes.

Lorsque le niveau de ressource est réduit et que l'ensemble de requêtes simulant le niveau de charge courant de la chaine applicative est réexécuté, il est possible que la réduction ait été trop importante et qu'elle induise un franchissement d'un ou de plusieurs des seuils prédéterminés de paramètre de qualité de service.

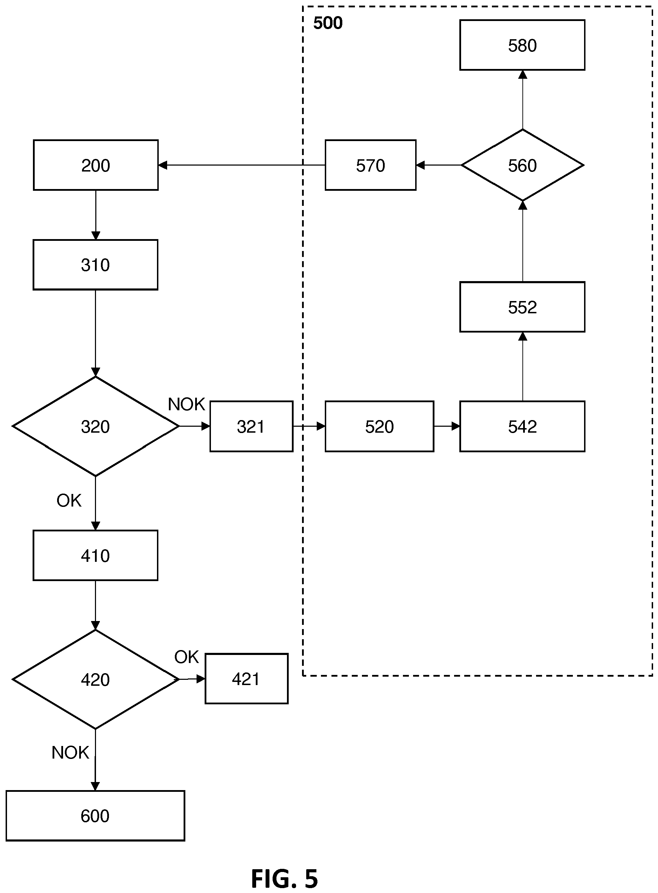

Comme présenté à la figure 3 et à la **figure 5**, durant l'exécution 200 de l'ensemble de requêtes, valeurs mesurées de paramètres de qualité de service sont régulièrement obtenues lors d'une étape 310. Ces valeurs, par exemple des temps de réponse à des requêtes, des messages d'erreur, ou autre, sont comparées 320 à des valeurs de seuils.

Il peut arriver que l'exécution de l'ensemble de requêtes entraine un dépassement des seuils prédéterminés de paramètre de qualité de service. Il y a alors un arrêt 321 de l'exécution du tir. Il est possible d'inscrire cet événement dans un fichier de suivi lors d'une étape de mise à jour de celui-ci. Etant donné que l'infrastructure informatique n'a pas réagi comme attendu, au moins un niveau de ressource doit être modifié.

Si les valeurs mesurées de paramètre de qualité de service ne sont pas en adéquation avec les valeurs de seuil prédéterminée de paramètre de qualité de service, le procédé peut comprendre une étape 520 d'identification d'une ressource responsable d'une détérioration de la qualité de service. Par exemple, la ressource responsable d'une détérioration de la qualité de service est sélectionnée parmi les ressources dont la valeur mesurée d'utilisation dépasse le seuil prédéterminé maximum d'utilisation. Ainsi, il peut être vérifié lors de l'étape 520, si la valeur mesurée d'utilisation d'au moins une ressource dépasse son seuil prédéterminé maximum d'utilisation.

Cette ressource responsable d'une détérioration de la qualité de service peut par exemple être la dernière ressource dont le niveau a été réduit ou une autre ressource présentant un dépassement de son seuil prédéterminé d'utilisation maximale. Par exemple, si le dernier tir a été lancé suite à la réduction d'un niveau de ressource, il est vérifié s'il est possible de procéder à une moindre diminution du niveau de cette ressource.

Le procédé peut également comprendre une étape de sélection 542 d'une ressource dont le niveau est à augmenter. La ressource responsable peut par exemple être la ressource sous-utilisée dont le niveau a été modifié avant la réexécution de l'ensemble de requêtes. Alternativement, la ressource responsable d'une détérioration de la qualité de service peut être une ressource ayant déjà été optimisée par le processus et qui suite à la dernière diminution d'une autre ressource présente une valeur mesurée d'utilisation de ressource dépassant son seuil prédéterminé maximum d'utilisation.

Le procédé selon l'invention peut alors comprendre une étape 552 de d'augmentation du niveau d'une ressource responsable d'une détérioration de la qualité de service, par exemple une ressource surutilisée avant une réexécution des étapes du procédé d'optimisation. Comme précédemment, il est préférable d'augmenter le niveau d'une seule ressource.

Comme précédemment mentionné, le procédé peut comprendre une étape 560 de détermination d'un mode de modification de la ressource, une étape 570 de génération d'un script permettant de modifier le niveau de la ressource et une étape 580 de génération d'une alerte.

Une fois plusieurs itérations du procédé réalisées, le procédé permet d'atteindre progressivement la mise en oeuvre de l'ensemble des requêtes dans une infrastructure informatique dont les niveaux de ressource ont été réduits de façon à permettre un minimum de ressources utilisées tout en garantissant un niveau de qualité de service prédéterminé.

Dans ce contexte, suite à une réexécution, les valeurs mesurées de paramètre de qualité de service seront en adéquation avec les valeurs seuils prédéterminé de paramètre de qualité de service et, une majorité sinon toutes les valeurs mesurées d'utilisation de ressources seront supérieures aux valeurs de seuil prédéterminé minimum d'utilisation. Dans ce cas, le procédé comportera avantageusement une étape 600 de génération d'un bilan sur les ressources minimales nécessaires pour l'infrastructure informatique hébergeant la chaine applicative. Le bilan pourra comporter avantageusement les identifiants d'une ou de plusieurs ressources sous-utilisées avec des niveaux de ressource réduits. Ces niveaux de ressources réduits correspondant au niveau de ces ressources permettant un bon fonctionnement de la chaine applicative. C'est-à-dire un fonctionnement permettant de respecter les seuils prédéterminés de paramètre de qualité de service. Ainsi, en fin de procédé, un administrateur de système d'information disposera d'une liste de ressources pouvant être optimisées et le niveau d'optimisation pouvant être atteint.

Le bilan peut prendre la forme d'un fichier listant les niveaux réduits ou minimaux de ressources permettant de répondre aux seuils de paramètre de qualité de service définis dans le cadre de l'utilisation définie.

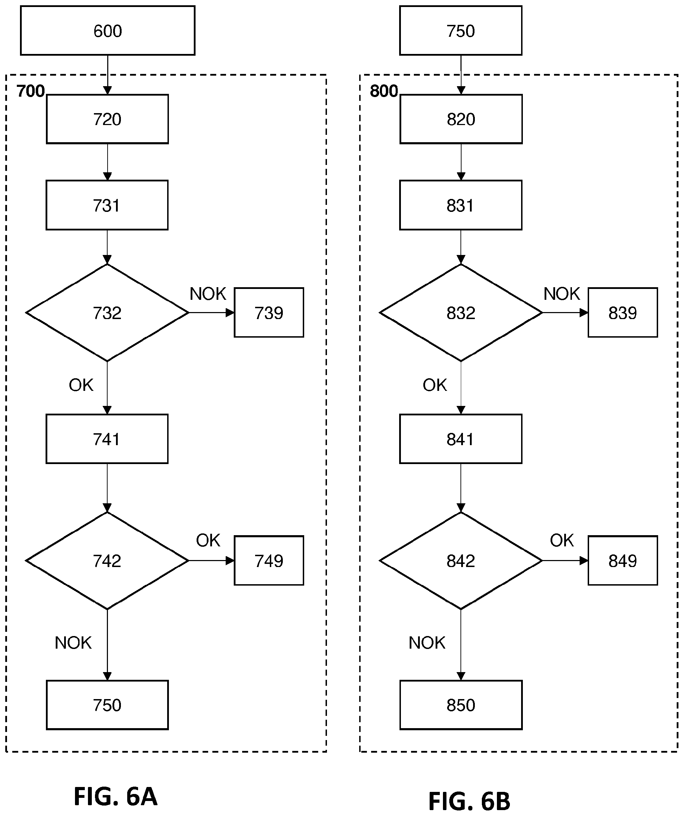

Comme présenté aux **figures 6A et 6B****,** le procédé de recherche de marge d'optimisation selon l'invention peut également comprendre une étape 700 de validation et/ou étape 800 d'endurance. S'il est déterminé qu'il n'y a pas de marge d'optimisation, alors ces étapes ne seront pas enclenchées. Sinon, si une étape de validation et/ou d'endurance sont enclenchées, une étape d'alerte peut être exécutée pour avertir un utilisateur, le fichier de suivi peut aussi être mis à jour lors d'une étape. L'objectif de ces étapes 700 et 800 est de vérifier que dans le temps la nouvelle configuration de ressources pourra fonctionner et répondre aux besoins de la chaine applicative.

L'étape 700 de validation comporte une réexécution 720 de l'ensemble des requêtes sur l'infrastructure informatique 1 avec des valeurs de niveaux de ressources correspondant de préférence aux valeurs de niveaux réduits de ressources définis dans le bilan généré à l'étape 600. La validation 700 vise à reprendre les valeurs de niveaux réduits de ressources de façon à valider la marge d'optimisation identifiée dans le cadre du procédé. Afin de s'assurer de la pertinence de la marge d'optimisation déterminée, un ou plusieurs mécanismes de validation peuvent être mis en oeuvre. Le processus de validation peut être mis en oeuvre suite à l'exécution de l'étape 500 d'identification d'une marge d'optimisation des ressources ou suite à l'exécution de l'étape 600 de génération d'un bilan sur les ressources minimales nécessaires pour l'infrastructure informatique hébergeant la chaine applicative comportant des niveaux de ressource réduits.

L'étape 800 d'endurance peut être réalisée sur une période de temps plus longue et comprendre la réexécution 820 de l'ensemble de requêtes, ladite exécution 820 de l'ensemble de requêtes peut, de façon préférée, simuler une charge plus forte que le fonctionnement de la chaine applicative. La mesure, réalisée sur une plus longue durée, peut par exemple se poursuivre sur plusieurs heures.

Comme présenté aux figures 6A et 6B, une validation peut consister à exécuter 720 une nouvelle fois le tir avec les derniers niveaux de ressource définis afin de vérifier que l'infrastructure réagit correctement.

L'étape de validation 700 et l'étape d'endurance 800 peuvent comprendre une étape 731, 831 de mesure des valeurs de paramètres de qualité de service en réponse à l'exécution 720, 820 de l'ensemble de requêtes et une comparaison 732, 832 des valeurs mesurées de paramètres de qualité de service à des valeurs de seuils prédéterminés de paramètres de qualité de service. Si les seuils sont dépassés (NOK), il y a arrêt 739, 839 de l'exécution de l'ensemble de requêtes, éventuellement sauvegarde de valeurs mesurées et puis la mise en oeuvre de l'étape de modification 550 du niveau d'une ressource.

Si les seuils ne sont pas dépassés alors il y a une mesure 741, 841 de valeurs d'utilisation de ressources en réponse à l'exécution de l'ensemble de requêtes et comparaison 742, 842 des valeurs mesurées d'utilisation de ressources à des valeurs de seuil prédéterminé minimum d'utilisation de ressources. Si les seuils ne sont pas dépassés (NOK), il y a arrêt 749, 849 de l'exécution de l'ensemble de requêtes, éventuellement sauvegarde de valeurs mesurée et puis la mise en oeuvre de l'étape de modification 550 du niveau d'-une ressource.

Si les seuils sont dépassés (NOK) alors les niveaux de ressources utilisés sont validés 750, 850.

A la fin du procédé, il est possible d'obtenir un jeu de niveau réduit de ressources qui permettent un fonctionnement adéquat de la chaine applicative. Le tableau 3 ci-dessous illustre un exemple de valeurs de niveaux réduits de ressources pouvant être obtenu.

**Tableau 3**

| | CPU | Débit réseau | Mémoire vive |
|---|---|---|---|
| **Valeurs mesurées d'utilisation** | **45%** | **350 Kbps** | **60%** |
| **Seuils prédéterminés maximum d'utilisation** | 70% | 1000 Kbps | 70% |
| **Seuils prédéterminés minimum d'utilisation** | 30 % | NA | 40 % |
| **Niveau de la ressource (i.e. niveau initial)** | 4 CPU | NA | 64 Go |
| **Niveau réduit de la ressource** | **3 CPU** | | **16 Go** |

Afin de conserver une trace des essais réalisés, les différentes données générées ou exécutée dans le cadre de la mise en oeuvre du procédé peuvent être stockées dans un fichier de suivi.

En outre, des alertes peuvent être émises vers un utilisateur ou être stockées dans un fichier de suivi.

Comme cela a été mentionné préalablement dans le cadre du procédé selon l'invention, l'exécution 200 de l'ensemble de requêtes peut être interrompue de façon à analyser les données mesurées et à réitérer le procédé avec des valeurs niveaux de ressources modifiés. Ainsi, le procédé peut comprendre une étape d'arrêt de l'exécution de l'ensemble de requêtes.

L'invention porte selon un autre aspect sur un **dispositif 100 de recherche de marge d'optimisation des ressources d'une infrastructure informatique,** ladite infrastructure informatique hébergeant une chaine applicative faisant appel à une pluralité de ressources, ledit dispositif comportant :
- Un module 20 d'injection, apte à exécuter un ensemble de requêtes, ladite exécution de l'ensemble de requêtes simulant le fonctionnement de la chaine applicative, ce module 20 peut être apte à exécuter un script, par exemple écrit en langage Bash, qui automatise les tâches liées à l'exécution de l'ensemble de requêtes,
- Un module 30 de suivi du niveau de service apte à analyser des résultats de l'ensemble de requêtes, à mesurer des valeurs de paramètres de qualité de service en réponse à l'exécution de l'ensemble de requêtes et à comparer des valeurs mesurées de paramètres de qualité de service à des valeurs de seuils prédéterminés de paramètres de qualité de service,
- Un module 40 de suivi de ressources apte à analyser l'utilisation des ressources, à mesurer des valeurs d'utilisation de ressources en réponse à l'exécution de l'ensemble de requêtes et à comparer les valeurs mesurées d'utilisation de ressources à des valeurs de seuils prédéterminés minimum d'utilisation de ressources,
- Un module 50 d'optimisation de ressource apte à identifier une marge d'optimisation des ressources, ladite identification comportant l'identification d'une ressource sous-utilisée, ladite ressource sous-utilisée étant une ressource dont la valeur d'utilisation de ressource est inférieure à la valeur de seuil prédéterminé maximum d'utilisation de ladite ressource alors que les valeurs mesurées de paramètres de qualité de service sont en adéquation avec les valeurs des seuils prédéterminés de paramètres de qualité de service.

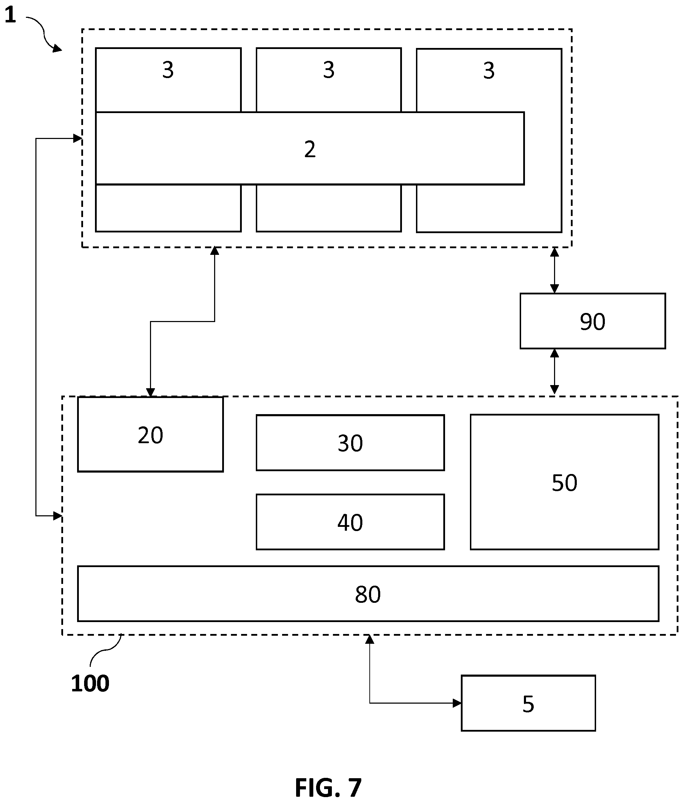

La **figure 7** illustre schématiquement une représentation fonctionnelle non limitative d'un mode de réalisation d'un dispositif 100 de recherche de marge d'optimisation des ressources 3 d'une infrastructure informatique 1 hébergeant une chaine applicative 2. Ce dispositif peut notamment comprendre au moins une machine informatique et un logiciel pour mettre en oeuvre le procédé de gestion dynamique selon l'invention.

Sur la figure 7 est affiché un terminal utilisateur 5 via lequel, un utilisateur peut interagir, par exemple par l'intermédiaire d'un réseau de communication, avec le dispositif 100 selon l'invention. Le terminal utilisateur 5 est un ordinateur, une tablette numérique, un téléphone portable, ou plus généralement tout dispositif permettant à un utilisateur d'émettre des requêtes, via un réseau de communication (par exemple LAN, WLAN, ou PAN, journal d'une base de données, courriel), vers le dispositif 100 de recherche de marge d'optimisation. A cet égard, le terminal utilisateur 5 peut être pourvu d'une application cliente permettant d'envoyer des requêtes ou des instructions au dispositif 100 de recherche de marge d'optimisation et d'en interpréter les réponses. Cette application cliente est, par exemple, un navigateur Web FireFox ®, Fennec ®, Opéra ®, Opéra Mobile ®, Internet Explorer®, Google Chrome® par exemple), ou un navigateur ftp (tel que FileZilla®).

L'infrastructure 1 peut comporter une pluralité de ressources 3 et de machines. Chaque machine peut comprendre un microprocesseur, des moyens de stockage (tel qu'un disque dur qu'il soit local ou distant), et une interface de communication (par exemple une interface réseau de type Ethernet, FiberChannel, InfiniBand...). Le microprocesseur, les moyens de stockage et l'interface de communication sont avantageusement interconnectés par un bus.

Lorsque l'on prête une action au dispositif selon l'invention celle-ci est en fait effectuée par un microprocesseur du dispositif commandé par des codes instructions enregistrés dans une mémoire du dispositif. Si l'on prête une action à une application, celle-ci est en fait effectuée par un microprocesseur du dispositif dans une mémoire duquel les codes instructions correspondant à l'application sont enregistrés. Lorsque le dispositif selon l'invention émet ou reçoit un message, ce message est émis ou reçu par une interface de communication du dispositif.

Comme déjà mentionné le dispositif selon l'invention permet, en réponse à l'exécution de l'ensemble de requêtes, de mesurer des valeurs de paramètres de qualité de service et des valeurs d'utilisation de ressources. Pour cela, le dispositif 100 peut comporter ou être associé à des sondes 90. La ou les sondes permettent de collecter des données sur la consommation des ressources de l'infrastructure informatique et plus particulièrement de chaque machine la composant. Plusieurs ressources peuvent être mesurées en parallèle. Ces mesures de la consommation des ressources peut être réalisées à partir d'une sonde de type « Nigel's Monitor » (Nmon) ou « Performance Monitor » (Perfmon). Les sondes Nmon permettent par exemple d'afficher les données de CPU, mémoire, swap, réseau, des informations sur les utilisateurs, les groupes, les supports de stockages, sur l'utilisation du kernel, ou les processus les plus consommateurs. Les sondes de type Perfmon permettent de mesurer les performances d'une infrastructure informatique. Les informations collectées peuvent par exemple correspondre à des pourcentages d'utilisation de ressources, des temps de réponse, des temps de traitement mais également le statut des ports, le nombre de files de message JDBC ou JMS, le taux d'occupation du système de fichiers, le taux de fonctionnement du ramasse miettes ou récupérateur de mémoires (pour « garbage collector » en anglais) pour les applications J2EE (pour « Java Enterprise Edition » en anglais).

Ces sondes peuvent être associées à chaque ressource pour remonter les informations de mesure ou métriques, représentant l'état de fonctionnement des ressources et l'utilisation ou la consommation associée. Pour chaque ressource, la ou les sondes définissent un identifiant de la ressource et une valeur d'utilisation de ressources. La consommation ou utilisation de chaque ressource peut être suivi en continue ou à des intervalles configurables de façon à obtenir des informations pour chaque ressource en fonction du temps. Ces informations peuvent être stockées dans une mémoire. Dans certains modes de réalisation, le dispositif comporte une interface homme-machine permettant de définir les sondes de consommation sur chaque machines qui remontent les métriques provenant de l'utilisation des ressources de la machine.

Le dispositif 100 selon l'invention peut comporter en outre un module d'interface homme-machine (IHM) et un module de communication apte à communiquer par exemple avec l'infrastructure informatique ou le terminal d'un utilisateur.

Ces différents unités ou modules sont distincts sur la figure 7 mais l'invention peut prévoir divers types d'agencement comme par exemple un seul module cumulant l'ensemble des fonctions décrites ici. De même, ces moyens peuvent être divisés en plusieurs cartes électroniques ou bien rassemblés sur une seule carte électronique.

Ainsi, le dispositif 100, indépendant ou installé au sein d'une infrastructure informatique 1, et le procédé selon l'invention qu'il est apte à mettre en oeuvre permettent de rechercher au moins une marge d'optimisation des ressources de façon rapide et automatique. Ils sont capables de rapidement déterminer quelles ressources pourraient être diminuées sur l'infrastructure informatique tout en conservant une qualité de service à un niveau souhaité. En outre, grâce aux étapes de modification des niveaux de ressources, ils sont capables de confirmer la capacité des nouveaux niveaux de ressources proposés à permettre un fonctionnement correcte de la chaine applicative considérée.

Tous ces avantages contribuent donc à améliorer la performance de la gestion des infrastructures informatiques.

## Revendications

1. Procédé de recherche de marge d'optimisation des ressources d'une infrastructure informatique, ladite infrastructure informatique hébergeant une chaine applicative faisant appel à une pluralité de ressources, ledit procédé comportant les étapes suivantes :
- Exécution (200) d'un ensemble de requêtes, ladite exécution de l'ensemble de requêtes simulant le fonctionnement de la chaine applicative,
- Analyse (300) des résultats de l'ensemble de requêtes, ladite analyse comportant une mesure (310) de valeurs de paramètres de qualité de service en réponse à l'exécution de l'ensemble de requêtes et une comparaison (320) des valeurs mesurées de paramètres de qualité de service à des valeurs de seuils prédéterminés de paramètres de qualité de service,
- Analyse (400) de l'utilisation des ressources, ladite analyse comportant une mesure (410) de valeurs d'utilisation de ressources en réponse à l'exécution de l'ensemble de requêtes et une comparaison (420) des valeurs mesurées d'utilisation de ressources à des valeurs de seuils prédéterminés minimum d'utilisation de ressources,
- Identification (500) d'une marge d'optimisation des ressources, ladite identification comportant l'identification d'une ressource sous-utilisée, ladite ressource sous-utilisée étant une ressource dont la valeur mesurée d'utilisation de ressource est inférieure à la valeur de seuil prédéterminé minimum d'utilisation de ladite ressource alors que les valeurs mesurées de paramètres de qualité de service sont en adéquation avec les valeurs des seuils prédéterminés de paramètres de qualité de service.

2. Procédé de recherche de marge d'optimisation selon la revendication 1, **caractérisé en ce qu'**il comprend une étape de modification (550) du niveau d'une ressource, de préférence d'une ressource sous-utilisée, avant une réexécution des étapes du procédé de recherche de marge d'optimisation.

3. Procédé de recherche de marge d'optimisation selon la revendication 2, **caractérisé en ce que** les étapes du procédé sont répétées jusqu'à ce que les valeurs mesurées d'utilisation de chacune des ressources soient comprises entre la valeur de seuil prédéterminé minimum d'utilisation de la ressource et une valeur de seuil prédéterminé maximum d'utilisation de la ressource.

4. Procédé de recherche de marge d'optimisation selon l'une des revendications 2 ou 3, **caractérisé en ce qu'**il comprend la mise en oeuvre (570) d'un script permettant de contrôler automatiquement le niveau de la ressource.

5. Procédé de recherche de marge d'optimisation selon l'une des revendications 2 ou 3, **caractérisé en ce que**, si la ressource à modifier nécessite une intervention manuelle pour sa modification, il comprend la génération (580) d'une alerte comportant un identifiant de la ressource dont le niveau est à modifier et une instruction sur le niveau à atteindre.

6. Procédé de recherche de marge d'optimisation selon l'une quelconque des revendications 1 à 4, **caractérisé en ce qu'**il comprend, si plusieurs ressources sous-utilisées ont été identifiées, une étape de sélection (541) d'une ressource sous-utilisée.

7. Procédé de recherche de marge d'optimisation selon la revendication 6, **caractérisé en ce que** chacune des ressources est associée à un paramètre de priorité et **en ce que** l'étape de sélection de la ressource sous-utilisée prend en compte la valeur du paramètre de priorité de chacune des ressources sous-utilisées.

8. Procédé de recherche de marge d'optimisation selon l'une quelconques des revendications 2 à 7, **caractérisé en ce que** la valeur du niveau modifié d'une ressource est calculée en fonction de la différence entre la valeur mesurée d'utilisation de la ressource, une valeur du seuil prédéterminé maximum d'utilisation de la ressource et une valeur de pas de la ressource.

9. Procédé de recherche de marge d'optimisation selon l'une quelconques des revendications 3 à 8, **caractérisé en ce qu'**il comprend une étape de modification (552) du niveau d'une ressource dont la valeur mesurée d'utilisation dépasse le seuil prédéterminé maximum d'utilisation avant une réexécution des étapes du procédé d'optimisation.

10. Procédé de recherche de marge d'optimisation selon l'une quelconques des revendications 1 à 9, **caractérisé en ce que**, si les valeurs mesurées de paramètre de qualité de service ne sont pas en adéquation avec les valeurs seuil de paramètre de qualité de service, il comprend une étape (520) d'identification d'une ressource responsable d'une détérioration de la qualité de service.

11. Procédé de recherche de marge d'optimisation selon l'une quelconque des revendications 1 à 10, **caractérisé en ce que**, si les valeurs mesurées de paramètre de qualité de service sont en adéquation avec les valeurs seuils de paramètre de qualité de service et les valeurs mesurées d'utilisation de ressources sont supérieures aux valeurs de seuils prédéterminés minimum d'utilisation, il comprend une étape (600) de génération d'un bilan comportant des valeurs de niveau réduit de ressource pour l'infrastructure informatique hébergeant la chaine applicative.

12. Dispositif (100) de recherche de marge d'optimisation des ressources d'une infrastructure informatique hébergeant une chaine applicative, ledit dispositif comportant :
- Un module (20) d'injection, apte à exécuter un ensemble de requêtes, ladite exécution de l'ensemble de requêtes simulant le fonctionnement de la chaine applicative,
- Un module (30) de suivi du niveau de service apte à analyser des résultats de l'ensemble de requêtes, à mesurer des valeurs de paramètres de qualité de service en réponse à l'exécution de l'ensemble de requêtes et à comparer des valeurs mesurées de paramètres de qualité de service à des valeurs de seuils prédéterminés de paramètres de qualité de service,
- Un module (40) de suivi de ressources apte à analyser l'utilisation des ressources, à mesurer des valeurs d'utilisation de ressources en réponse à l'exécution de l'ensemble de requêtes et à comparer les valeurs mesurées d'utilisation de ressources à des valeurs de seuils prédéterminés minimum d'utilisation de ressources,
- Un module (50) d'optimisation de ressource apte à identifier une marge d'optimisation des ressources, ladite identification comportant l'identification d'une ressource sous-utilisée, ladite ressource sous-utilisée étant une ressource dont la valeur d'utilisation de ressource est inférieure à la valeur de seuil prédéterminé minimum d'utilisation de ladite ressource alors que les valeurs mesurées de paramètres de qualité de service sont en adéquation avec les valeurs des seuils prédéterminés de paramètres de qualité de service.

## Patentansprüche

1. Verfahren zur Suche nach Optimierungsspielraum für Ressourcen einer IT-Infrastruktur, wobei die IT-Infrastruktur eine Anwendungskette mit Nutzung einer Mehrzahl von Ressourcen beherbergt, wobei das Verfahren die folgenden Schritte umfasst:
- Ausführung (200) eines Satzes von Anforderungen, wobei die Ausführung des Anforderungssatzes das Funktionieren der Anwendungskette simuliert,
- Analyse (300) der Ergebnisse des Anforderungssatzes, wobei die Analyse eine Messung (310) von Parameterwerten für Bedienungsqualität in Reaktion auf die Ausführung des Anforderungssatzes und einen Vergleich (320) der gemessenen Parameterwerte für Bedienungsqualität mit vorbestimmten Schwellenwerten der Bedienungsqualitätsparameter umfasst,
- Analyse (400) der Ressourcennutzung, wobei die Analyse eine Messung (410) von Werten der Ressourcennutzung in Reaktion auf die Ausführung des Anforderungssatzes und einen Vergleich (420) der gemessenen Ressourcennutzungswerte mit vorbestimmten Mindestschwellenwerten der Ressourcennutzung umfasst,
- Erkennung (500) eines Optimierungsspielraums für Ressourcen, wobei die Erkennung das Identifizieren einer untergenutzten Ressource umfasst, wobei die untergenutzte Ressource eine solche ist, deren gemessener Wert der Ressourcennutzung kleiner als der vorbestimmte Mindestschwellenwert der Ressourcennutzung ist, während die gemessenen Werte der Bedienungsqualitätsparameter im Einklang mit den vorbestimmten Schwellenwerten der Bedienungsqualitätsparameter stehen.

2. Verfahren zur Suche nach Optimierungsspielraum nach Anspruch 1, **dadurch gekennzeichnet, dass** es einen Schritt der Änderung (550) des Niveaus einer Ressource umfasst, vorzugsweise einer untergenutzten Ressource, und dies vor einer erneuten Ausführung der Schritte des Verfahrens zur Suche nach Optimierungsspielraum.

3. Verfahren zur Suche nach Optimierungsspielraum nach Anspruch 2, **dadurch gekennzeichnet, dass** die Schritte des Verfahrens wiederholt werden, bis die gemessenen Werte der Nutzung jeder der Ressourcen zwischen einem vorbestimmten Mindestschwellenwert der Ressourcennutzung und einem vorbestimmten Höchstschwellenwert der Ressourcennutzung liegen.

4. Verfahren zur Suche nach Optimierungsspielraum nach einem der vorstehenden Ansprüche 2 oder 3, **dadurch gekennzeichnet, dass** es die Implementierung (570) eines Skripts zur automatischen Steuerung des Niveaus der Ressource umfasst.

5. Verfahren zur Suche nach Optimierungsspielraum nach einem der vorstehenden Ansprüche 2 oder 3, **dadurch gekennzeichnet, dass** es, wenn die zu ändernde Ressource einen manuellen Eingriff zu ihrer Änderung erfordert, die Erzeugung (580) einer Warnung umfasst, die eine Kennung der Ressource umfasst, deren Niveau geändert werden soll und eine Anweisung zum zu erreichenden Niveau.

6. Verfahren zur Suche nach Optimierungsspielraum nach einem der vorstehenden Ansprüche 1 bis 4, **dadurch gekennzeichnet, dass** es, wenn mehrere untergenutzten Ressourcen identifiziert worden sind, einen Schritt zur Auswahl (541) einer untergenutzten Ressource umfasst.

7. Verfahren zur Suche nach Optimierungsspielraum nach Anspruch 6, **dadurch gekennzeichnet, dass** jede der Ressourcen mit einem Prioritätsparameter verbunden ist, und dass der Schritt zur Auswahl der untergenutzten Ressource den Wert des Prioritätsparameters jeder der untergenutzten Ressourcen berücksichtigt.

8. Verfahren zur Suche nach Optimierungsspielraum nach einem der vorstehenden Ansprüche 2 bis 7, **dadurch gekennzeichnet, dass** der Wert des geänderten Niveaus einer Ressource je nach der Differenz zwischen dem gemessenen Wert der Ressourcennutzung, einem Wert des vorbestimmten Höchstschwellenwerts der Ressourcennutzung und einem Ressourcen-Pitchwert der Ressource berechnet wird.

9. Verfahren zur Suche nach Optimierungsspielraum nach einem der vorstehenden Ansprüche 3 bis 8, **dadurch gekennzeichnet, dass** es einen Schritt zur Änderung (552) des Niveaus einer Ressource umfasst, deren gemessener Nutzungswert den vorbestimmten Höchstschwellenwert der Nutzung übersteigt, und dies vor einer erneuten Ausführung der Schritte des Optimierungsverfahrens.

10. Verfahren zur Suche nach Optimierungsspielraum nach einem der vorstehenden Ansprüche 1 bis 9, **dadurch gekennzeichnet, dass** es, wenn die gemessenen Werte der Bedienungsqualitätsparameter nicht im Einklang mit den Schwellenwerten der Bedienungsqualitätsparameter stehen, einen Schritt (520) zur Erkennung einer für eine Verschlechterung der Bedienungsqualität verantwortlichen Ressource umfasst.

11. Verfahren zur Suche nach Optimierungsspielraum nach einem der vorstehenden Ansprüche 1 bis 10, **dadurch gekennzeichnet, dass**, wenn die gemessenen Werte der Bedienungsqualitätsparameter im Einklang mit den Schwellenwerten der Bedienungsqualitätsparameter stehen und die gemessenen Werte der Ressourcennutzung größer den vorbestimmten Mindestschwellenwerten der Ressourcennutzung sind, einen Schritt (600) zur Erzeugung einer Bilanz umfasst, die Werte eines reduzierten Ressourcenniveaus für die IT-Infrastruktur umfasst, die die Anwendungskette beherbergt.

12. Vorrichtung (100) zur Suche nach Optimierungsspielraum der Ressourcen einer IT-Infrastruktur, die eine Anwendungskette beherbergt, wobei die Vorrichtung folgendes umfasst:
- ein Modul (20) zur Injektion, das in der Lage ist, einen Satz von Anforderungen auszuführen, wobei die Ausführung des Anforderungssatzes das Funktionieren der Anwendungskette simuliert,
- ein Modul (30) zur Verfolgung des Bedienungsniveaus, das in der Lage ist, die Ergebnisse des Anforderungssatzes zu analysieren, Werte der Bedienungsqualitätsparameter in Reaktion auf die Ausführung des Anforderungssatzes zu messen und gemessene Werte der Bedienungsqualitätsparameter mit vorbestimmten Schwellenwerten von Bedienungsqualitätsparametern zu vergleichen,
- ein Modul (40) zur Verfolgung von Ressourcen, das in der Lage ist, die Ressourcennutzung zu analysieren, Werte der Ressourcennutzung in Reaktion auf die Ausführung des Anforderungssatzes zu messen und die gemessenen Werte der Ressourcennutzung mit vorbestimmten Mindestschwellenwerten der Ressourcennutzung zu vergleichen,
- ein Modul (50) zur Ressourcenoptimierung, das in der Lage ist, einen Optimierungsspielraum der Ressourcen zu erkennen, wobei die Erkennung das Identifizieren einer untergenutzten Ressource umfasst, wobei die untergenutzte Ressource eine solche ist, deren Wert der Ressourcennutzung kleiner als der vorbestimmte Mindestschwellenwert der Ressourcennutzung ist, während die gemessenen Werte der Bedienungsqualitätsparameter im Einklang mit den vorbestimmten Schwellenwerten der Bedienungsqualitätsparameter stehen.

## Claims

1. A method for searching for the optimization margin of the resources of an IT infrastructure, said IT infrastructure hosting an application chain involving a plurality of resources, said method including the following steps:
- Executing (200) a set of requests, said execution of the set of requests simulating the operation of the application chain,
- Analyzing (300) the results of the set of requests, said analysis including a measurement (310) of service quality parameter values in response to the execution of the set of requests and a comparison (320) of the measured service quality parameter values to predetermined service quality parameter threshold values,
- Analyzing (400) the resource utilization, said analysis including a measurement (410) of resource utilization values in response to the execution of the set of requests and a comparison (420) of the measured resource utilization values to predetermined minimum resource utilization threshold values,
- Identifying (500) an optimization margin of the resources, said identification including the identification of an underutilized resource, said underutilized resource being a resource whose measured resource utilization value is lower than the predetermined minimum resource utilization threshold value while the measured service quality parameter values are in adequacy with the predetermined service quality parameter threshold values.

2. The optimization margin search method according to claim 1, **characterized in that** it comprises a step of modifying (550) the level of a resource, preferably of an underutilized resource, before a re-execution of the steps of the optimization margin search method.

3. The optimization margin search method according to claim 2, **characterized in that** the steps of the method are repeated until the measured utilization values of each of the resources are comprised between the predetermined minimum resource utilization threshold value and a predetermined maximum resource utilization threshold value.

4. The optimization margin search method according to any of claims 2 or 3, **characterized in that** it comprises the implementation (570) of a script allowing to automatically control the level of the resource.

5. The optimization margin search method according to any of claims 2 or 3, **characterized in that**, if the resource to be modified requires manual intervention for its modification, it comprises the generation (580) of an alert including an identifier of the resource whose level is to be modified and an instruction on the level to be reached.

6. The optimization margin search method according to any one of claims 1 to 4, **characterized in that** it comprises, if several underutilized resources have been identified, a step of selecting (541) an underutilized resource.

7. The optimization margin search method according to claim 6, **characterized in that** each of the resources is associated to a priority parameter and **in that** the step of selecting the underutilized resource takes into account the value of the priority parameter of each of the underutilized resources.

8. The optimization margin search method according to any one of claims 2 to 7, **characterized in that** the value of the modified level of a resource is calculated based on the difference between the measured resource utilization value, a predetermined maximum resource utilization threshold value and a resource pitch value.

9. The optimization margin search method according to any one of claims 3 to 8, **characterized in that** it comprises a step of modifying (552) the level of a resource whose measured utilization value exceeds the predetermined maximum utilization threshold before a re-execution of the steps of the optimization method.

10. The optimization margin search method according to any one of claims 1 to 9, **characterized in that**, if the measured service quality parameter values are not in adequacy with the service quality parameter threshold values, it comprises a step of identifying (520) a resource responsible for a deterioration of the service quality.

11. The optimization margin search method according to any one of claims 1 to 10, **characterized in that**, if the measured service quality parameter values are in adequacy with the service quality parameter threshold values and the measured resource utilization values are greater than the predetermined minimum utilization threshold values, it comprises a step of generating (600) a balance sheet including values of reduced resource level for the IT infrastructure hosting the application chain.

12. A device (100) for searching for the optimization margin of the resources of an IT infrastructure hosting an application chain, said device including:
- an injection module (20) able to execute a set of requests, said execution of the set of requests simulating the operation of the application chain,
- a module (30) for tracking the service level able to analyze results of the set of requests, to measure service quality parameter values in response to the execution of the set of requests and to compare measured service quality parameter values with predetermined service quality parameter threshold values,
- a module (40) for tracking resources able to analyze the utilization of the resources, to measure resource utilization values in response to the execution of the set of requests and to compare the measured resource utilization values to predetermined minimum resource utilization threshold values,
- a module (50) for optimizing resources able to identify an optimization margin of the resources, said identification including the identification of an underutilized resource, said underutilized resource being a resource whose resource utilization value is smaller than the predetermined minimum resource utilization threshold value while the measured service quality parameter values are in adequacy with the predetermined service quality parameter threshold values.
